# EUROPEAN PATENT SPECIFICATION

(11) **EP 2 663 114 B1**
(45) Date of publication and mention of the grant of the patent: **12.07.2017**
(21) Application number: 13460028.7
(22) Date of filing: 09.05.2013
(51) Int. Cl.: H04W 16/18, H04W 64/00, H04W 24/08

(54) **METHOD FOR AUTOMATIC DETERMINATION OF CELLULAR NETWORK BASE STATION RADIATION ZONES**
VERFAHREN ZUR AUTOMATISCHEN BESTIMMUNG DER FLÄCHEBEDECKUNG EINER BASISSTATION
PROCÉDÉ DE DÉTERMINATION AUTOMATIQUE DE LA COUVERTURE DE LA STATION DE BASE

(30) Priority: 11.05.2012 PL 39914712
(43) Date of publication of application: 13.11.2013
(73) Proprietor: Orange Polska S.A., 02-326 Warszawa (PL)
(72) Inventor: Patek, Piotr, 03 922 Warszawa (PL)
(74) Representative: Piotrowicz, Alicja

(56) References cited:
- US-A1- 2011 306 365
- US-A1- 2011 307 428
- US-A1- 2011 319 097

## Description

The present invention relates to a method for automatic determination of the boundary lines of cellular network base station radiation zones, as well as to a method for automatic determination of cellular network base station coverage of radiation zones on the grounds of data delivered by subscribers of cellular network of a specific cellular operator.

A Polish translation of European Patent no. PL/EP 2037707 T3, regards a method for monitoring and identifying radio coverage gaps of a public land mobile network, characterised in that at the moment of crossing the boundary line of a cellular network base station radiation zone by the subscriber of a cellular phone, involving appearing inside or leaving the radiation zone, the base station of the cellular network determines the spatial location and identification data of the cellular phone subscriber and then generates a report of each such event.

Whereas the documentation of Polish invention application PL 371748 A1, describes a method of personal protection and a system of personal protection, involving that the spatial location data of an individual is obtained by means of GPS (Global Positioning System) and then the data concerning the spatial location of an individual is transmitted by the cellular phone to a monitoring centre.

The essence of a method for automatic determination of cellular network base station radiation zones according to the invention consists in that at the moment of appearance of the i-th active cellular phone, where natural number i = 1, 2, ... , n, in the radiation zone of a cellular network k-base station, where natural number k = 1, 2,..., r, by means of which electromagnetic waves are being currently received and emitted, just after crossing the boundary line of a cellular network k-th base station radiation zone, in the k-th base station of a cellular network, a measurement of the boundary spatial location of the active i-th cellular phone is immediately conducted and the result of the spatial boundary location measurement of the active i-th cellular phone is then encoded and superimposed onto a thigh-frequency electrical signal, which is sent to the active i-th cellular phone.

After receiving the high-frequency electrical signal by the i-th cellular phone with encoded data on its boundary spatial location, the configuration and origin authenticity of the received electrical signal is verified in the processing unit of the identification module of the i-th active cellular phone subscriber, as well as it is checked whether the active i-th cellular phone has not received the high-frequency electrical signals that were emitted by the j-th base station of the cellular network prior to receiving the spatial boundary location measurement result from the k-th base station of the cellular network, where the numerical value of natural number j differs from the numerical value of natural number k, and natural number j = 1, 2,..., r. The negatively verified electrical signals are then deleted.

A positively verified electrical signal is superimposed onto a high-frequency electrical signal, which is being sent by means of electromagnetic waves to a network server equipped with a printer and plotter, as well as it is saved in the non-volatile memory of the network server equipped with a printer and plotter.

The electrical signal in the printer is converted to the printout of an encoded set of digits and letters, which constitutes a record of coordinates of the point belonging to the boundary line of the k-th base station radiation zone within a cellular network existing in a precisely determined time interval, while in the plotter, it is converted to a graph, which constitutes visualisation of the radiation zone boundary line of the k-th base station within a cellular network existing in a precisely determined time interval.

A temporal index determined in local time by the clock of an active i-th cellular phone expressing the time-moment of the active i-th cellular phone spatial boundary location measurement, is entered into the identification module processor of the active i-th cellular phone subscriber, and then, following supplementing the temporal index with a constant predefined component, a modified temporal index is generated in the identification module processor of the active i-th cellular phone subscriber, and an electrical signal with a modified temporal signal is created. The superimposing of the spatial location measurement results of the active i-th cellular phone onto a high-frequency electrical signal is then stopped in the identification module processor of the active i-th cellular phone subscriber, and transmission of electromagnetic waves to a network server equipped with a printer and a plotter is stopped as well. In the local time-moment determined by the clock of the active i-th cellular phone, expressed by a modified temporal index, superimposing of spatial location measurement results of the active i-th cellular phone onto a high-frequency electrical signal is then resumed, and transmission of electromagnetic waves to a network server equipped with a printer and a plotter is also resumed.

The essence of a variant of a method for automatic determination of cellular network base station radiation zones according to the invention consists in that at the moment the i-th active cellular phone, where natural number i = 1, 2,..., n, in which electromagnetic waves are being currently received and transmitted, appears in one of r radiation zones, where r is a finite natural number, the said radiation zones have been created by each of the r cellular network base stations, a measurement of the intra-zone spatial location of the active i-th cellular phone is executed at regular time-periods in each of the r cellular network base stations.

The measurement result of the active i-th cellular phone intra-zone spatial location is encoded and superimposed onto a high-frequency electrical signal, which is sent to the active i-th cellular phone. After receiving the high-frequency electrical signal by the active i-th cellular phone with encoded data on its intra-zone spatial location, the configuration and origin authenticity of the received electrical signal is verified in the processing unit of the identification module of the active i-th cellular phone subscriber. After correctness verification of the configuration and authenticity of origin from the own operator have been conformed, the electrical signal with encoded data on the intra-zone spatial location of the active i-th cellular phone in one of the r radiation zones, created by each of the r cellular network base stations, is stored in the memory of the identification module of the active i-th cellular phone subscriber, and the electrical signal is then applied onto the high-frequency electrical signal, which is further sent by means of electromagnetic waves to a network server equipped with a printer and a plotter, as well as it is saved in the non-volatile memory of the network server equipped with a printer and a plotter.

Electrical signals are received from the non-volatile memory of the network server and sent to the printer and converted in the said printer to a printout of an encoded set of digits and letters, which constitutes a record of point coordinates located within one of the r radiation zones created by each of the r cellular network base stations within a precisely determined time interval. The electrical signals are sent to a plotter and converted in the said plotter to a graph, which constitutes visualisation of coverage for radiation zones created by each of the r cellular network base stations existing in a precisely determined time interval.

A temporal index determined in local time by the clock of an active i-th cellular phone specifying the moment when the intra-zone spatial location of the active i-th cellular phone has been executed for the last time, is entered into the identification module processor of the i-th cellular phone subscriber. This electrical signal is supplemented with a constant predefined component, and the electrical signal with the modified temporal index is created. The superimposing of the intra-zone spatial location measurement results of the active i-th cellular phone onto a high-frequency electrical signal is then stopped in the processor of the identification module of the active i-th cellular phone subscriber, and transmission of electromagnetic waves to a network server equipped with a printer and a plotter is stopped as well. In the local time-moment determined by the clock of the active i-th cellular phone, expressed by a modified temporal index, superimposing of the spatial location measurement results of the active i-th cellular phone onto a high-frequency electrical signal is then resumed, and transmission of electromagnetic waves to a network server equipped with a printer and a plotter is also resumed.

The preferable results of a method for automatic determination of cellular network base station radiation zones, according to the invention, in relation to the methods known from the prior art, involve automatic acquiring of information about the coordinates of a specific cellular network base station radiation zone's boundary line and, following superimposing of all the active cellular phone's measurement results, obtaining of the boundary line for all base stations belonging to a cellular network through participation of the active cellular phones of specific cellular network subscribers in measurement execution.

In one embodiment of a method for automatic determination of cellular network base station radiation zones, according to the invention, at the moment of appearance of the i-th active cellular phone, where natural number i = 1, 2,..., n, in the radiation zone of a cellular network k-base station, where natural number k = 1, 2,..., r, which currently receives and emits electromagnetic waves, just after crossing the boundary line of a cellular network k-th base station radiation zone by an active i-th cellular phone, a measurement of the boundary spatial location of the active i-th cellular phone is immediately executed.

In the k-th base station of the cellular network, the measurement result of the active i-th cellular phone spatial boundary location is encoded and superimposed onto a high-frequency electrical signal, and the said electrical signal is sent to the active i-th cellular phone.

After receiving the high-frequency electrical signal by the i-th cellular phone, with encoded data on its boundary spatial location, the configuration and origin authenticity of the received electrical signal is verified in the processing unit of the identification module of the i-th active cellular phone subscriber, as well as it is checked whether the active i-th cellular phone has not received the high-frequency electrical signals that were emitted by the j-th base station of the cellular network prior to receiving the spatial boundary location measurement result from the k-th base station of the cellular network, where the numerical value of natural number j differs from the numerical value of natural number k, and natural number j = 1, 2,..., r.

Negatively verified electrical signals are deleted. A positively verified electrical signal is superimposed onto a high-frequency electrical signal, which is being sent by means of electromagnetic waves to a network server equipped with a printer and plotter, as well as it is saved in the non-volatile memory of the network server equipped with a printer and plotter.

The electrical signal in the printer is converted to the printout of an encoded set of digits and letters which constitutes a record of coordinates of the point belonging to the boundary line of the k-th base station radiation zone within a cellular network existing in a precisely determined time interval, while in the plotter, it is converted to a graph, which constitutes visualisation of the radiation zone boundary line of the k-th base station within a cellular network existing in a precisely determined time interval.

A temporal index determined in local time by the clock of an active i-th cellular phone specifying the moment when the boundary spatial location of an active i-th cellular phone has been executed, is entered into the identification module processor of the i-th cellular phone subscriber. Next, after supplementing the temporal index with a constant predefined component, a modified temporal index is generated, and an electrical signal with a modified temporal index created in the i-th active cellular phone subscriber identification module processor. The superimposure of the spatial location measurement results of the active i-th cellular phone onto a high-frequency electrical signal is then stopped in the processor of the identification module of the active i-th cellular phone subscriber, and transmission of electromagnetic waves to a network server equipped with a printer and a plotter is stopped as well. In the local time-moment determined by the clock of the active i-th cellular phone, expressed by a modified temporal index, the superimposure of the spatial location measurement results of the active i-th cellular phone onto a high-frequency electrical signal is resumed, and transmission of electromagnetic waves to a network server equipped with a printer and a plotter is also resumed.

In one embodiment of a variant of a method for automatic determination of cellular network base station radiation zones, according to the invention, at the moment when the i-th active cellular phone, where natural number i = 1, 2,..., n, in which electromagnetic waves are being currently received and transmitted, appears in one of r radiation zones, where r is a finite natural number, the said radiation zones have been created by each of the r cellular network base stations, a measurement of the intra-zone spatial location of the active i-th cellular phone is executed at regular time-periods in each of the r cellular network base stations.

The measurement result of the active i-th cellular phone intra-zone spatial location is encoded and superimposed onto a high-frequency electrical signal, and the said high-frequency electrical signal is sent to the active i-th cellular phone.

After receiving the high-frequency electrical signal by the i-th cellular phone with encoded data on its boundary spatial location, the configuration and origin authenticity of the received electrical signal is verified in the processing unit of the identification module of the i-th active cellular phone subscriber.

After correctness verification of the configuration and authenticity of origin from the own operator have been confirmed, the electrical signal with encoded data on the intra-zone spatial location of the active i-th cellular phone in one of the r radiation zones, created by each of the r cellular network base stations, is stored in the memory of the identification module of the active i-th cellular phone subscriber.

A positively verified electrical signal is superimposed onto a high-frequency electrical signal, which is being sent by means of electromagnetic waves to a network server equipped with a printer and plotter, as well as it is saved in the non-volatile memory of the network server equipped with a printer and plotter.

Electrical signals are received from the non-volatile memory of the network server and sent to the printer and converted in the said printer to a printout of an encoded set of digits and letters, which constitutes a record of point coordinates located within one of the r radiation zones created by each of the r cellular network base stations within a precisely determined time interval. Furthermore, the electrical signals are sent to a plotter and converted in the said plotter to a graph, which constitutes visualisation of coverage for radiation zones created by each of the r cellular network base stations existing in a precisely determined time interval.

A temporal index determined in local time by the clock of an active i-th cellular phone specifying the moment when the intra-zone spatial location of the active i-th cellular phone has been executed for the last time, is entered into the identification module processor of the i-th cellular phone subscriber, and then the electrical signal is being supplemented with a constant predefined component, and an electrical signal with a modified temporal index created. The superimposure of the intra-zone spatial location measurement results of the active i-th cellular phone onto a high-frequency electrical signal is then stopped in the identification module processor of the active i-th cellular phone subscriber, and transmission of electromagnetic waves to a network server equipped with a printer and a plotter is stopped as well. In the local time-moment determined by the clock of the active i-th cellular phone, expressed by a modified temporal index, the superimposure of the spatial location measurement results of the active i-th cellular phone onto a high-frequency electrical signal is resumed, and transmission of electromagnetic waves to a network server equipped with a printer and a plotter is also resumed.

A method for automatic determination of cellular network base station radiation zones, according to the invention, is suitable for use by any cellular network operators . While a method for automatic determination of cellular network base station radiation zones has been defined according to the invention in two independent claims and is presented in the form of specific embodiments in the description of the invention, it is obvious to a person skilled in the art of methods for automatic determination of cellular network base station radiation zones that the data contained, in them concerning a method for automatic determination of cellular network base station radiation zones cannot be interpreted as limiting the inventive idea only to the data.

## Claims

1. A method for automatic determination of cellular network base stations radiation zones, involving the processing of encoded electrical signals and transmitting them between the base station of a cellular network, a network server and cellular phones, **characterised in that** at the time when the active i-th cellular phone, where natural number i = 1, 2,..., n, by means of which electromagnetic waves are being currently received and emitted, appears in the cellular network a k-th base station radiation zone, where natural number k = 1, 2,..., r, just after crossing the boundary line of the cellular network k-th base station radiation zone by the active i-th cellular phone, a measurement of the spatial boundary location of the active i-th cellular phone is immediately executed, after which the result of the spatial boundary location measurement of the active i-th cellular phone is encoded and superimposed onto a high-frequency electrical signal, which is sent to the active i-th cellular phone, and after reception of a thigh-frequency electrical signal with encoded data about its spatial boundary location by the i-th active cellular phone, the configuration and origin authenticity of the received electrical signal is verified, as well as it is checked whether the active i-th cellular phone has not received, prior to reception of the spatial boundary location measurement result from the k-th base station of the cellular network, high-frequency electrical signals that have been emitted by the j-th base station of the cellular network, where the numerical value of natural number j differs from the numerical value of natural number k, and natural number j = 1, 2,..., r; next the negatively verified electrical signals are deleted, while a positively verified electrical signal is superimposed onto a high-frequency electrical signal, which is being sent by means of electromagnetic waves to a network server equipped with a printer and plotter, as well as it is saved in the non-volatile memory of the network server equipped with a printer and plotter, where it is converted in the said printer to the printout of an encoded set of digits and letter, which constitutes a record of point coordinates belonging to the boundary line of the cellular network k-th base station radiation zone existing in precisely defined time interval, while in the plotter, it is converted to a graph, which constitutes visualisation of the boundary line of the k-th base station radiation zone for a cellular network existing in a precisely defined time interval, after which a temporal index, which in local time, determined by the clock of an active i-th cellular phone, expresses the moment in time of spatial boundary location measurement completion for the active i-th cellular phone, is entered into identification module processor of the active i-th cellular phone subscriber; then after supplementing the temporal index with a constant predefined component, a modified temporal index is generated, and an electrical signal with a modified temporal index is created in the identification module processor of the active i-th cellular phone subscriber; superimposing of the spatial location measurement results of the active i-th cellular phone onto a high-frequency electrical signal is then stopped in the processor of the identification module of the active i-th cellular phone subscriber, and transmission of electromagnetic waves to a network server equipped with a printer and a plotter is stopped as well; then the local time-moment determined by the clock of the active i-th cellular phone, expressed by a modified temporal index, the superimposure of the spatial location measurement results of the active i-th cellular phone onto a high-frequency electrical signal is resumed, and transmission of electromagnetic waves to a network server equipped with a printer and a plotter is also resumed.

2. A method for automatic determination of cellular operator cellular network base station radiation zones, involving the processing of encoded electrical signals and transmitting them between the base station of a cellular network, a network server and cellular phones, **characterised in that** at the moment in time when the active i-th cellular phone, where natural number i = 1, 2,..., n, in which electromagnetic waves are being currently received and emitted, appears in one of the r radiation zones, where r is a finite natural number, the said radiation zones have been created by each of the r cellular network base stations, in each of the r cellular network base stations, measurement of the i-th cellular phone intra-zone spatial location is executed at regular time intervals; afterwards the measurement result of the active i-th cellular phone intra-zone spatial location is encoded and superimposed onto a high-frequency electrical signal, which is sent to the active i-th cellular phone; after the high-frequency electrical signal with encoded data on its intra-zone spatial location has been received by the active i-th cellular phone, the configuration and origin authenticity of the received electrical signal is verified in the identification module processor of the i-th cellular phone subscriber, and after correctness verification of the configuration and authenticity of origin from the own cellular network operator have been conformed, the electrical signal with encoded data on the intra-zone spatial location of the active i-th cellular phone in one of the r radiation zones, created by each of the r cellular network base stations, is stored in the memory of the identification module of the active i-th cellular phone subscriber, and the electrical signal is then superimposed onto the high-frequency electrical signal, which is sent by means of electromagnetic waves to a network server equipped with a printer and a plotter and saved in the non-volatile memory of the network server equipped with a printer and a plotter, whereupon electrical signals are received from the non-volatile memory of the network server, and then sent to said printer where they are converted to the printout of an encoded set of digits and letters, which constitutes a record of coordinates of the points located within one of the r radiation zones created by each of the r cellular network base stations within a precisely defined time interval, and the said electrical signals are also sent to the plotter, being converted in the said plotter to a graph, which constitutes visualisation of coverage of radiation zones created by each of the r cellular network base stations existing in a precisely defined time interval; a temporal index is then entered into the processor of the identification module of the active i-th cellular phone subscriber, which in local time, determined by the clock of the i-th cellular phone, expresses the moment in time when measurement of the intra-zone spatial location of the active i-th cellular phone has been done for the last time, after which the electrical signal is supplemented with a constant predefined component, and an electrical signal with a modified temporal index is created; superimposing of the active i-th cellular phone intra-zone spatial location measurement results onto a high-frequency electrical signal is then stopped in the processor of the identification module of the active i-th cellular phone subscriber, and conveying of electromagnetic waves to a network server equipped with a printer and a plotter is stopped as well; next in the local time-moment determined by the clock of the active i-th cellular phone, expressed by a modified temporal index, the superimposure of the spatial location measurement results of the active i-th cellular phone onto a high-frequency electrical signal is resumed, and transmission of electromagnetic waves to a network server equipped with a printer and a plotter is also resumed.

## Patentansprüche

1. Ein Verfahren zur automatischen Bestimmung der Strahlungszonen der Mobilfunk-Basisstationen durch Verarbeitung von codierten elektrischen Signalen und deren Übertragung zwischen der Basisstation eines Mobilfunknetzes, dem Netzwerkserver und den Mobiltelefonen, **dadurch gekennzeichnet, dass** zum Zeitpunkt des Erscheinens des i-ten aktiven Mobiltelefons, wobei die natürliche Zahl i = 1, 2, ..., n, das die elektromagnetischen Wellen derzeit empfangen und gesendet wird, in der Strahlungszone der k-ten Basisstation des Mobilfunknetzes, wobei die natürliche Zahl k = 1, 2, ..., r, unmittelbar nachdem die Grenzlinie der Strahlungszone der k-ten Basisstation des Mobilfunknetzes durch das aktive i-te Mobiltelefon überquert worden ist, wird sofort die Messung der räumlichen Grenzlage des aktiven i-ten Mobiltelefons durchgeführt, wonach das Messergebnis der räumlichen Position des aktiven i-ten Mobiltelefons innerhalb der Zone codiert auf ein elektrisches Hochfrequenzsignal überlagert wird, das an das aktive i-te Mobiltelefon gesendet wird, und nach dem Empfang des elektrischen Hochfrequenzsignals mit den codierten Daten der räumlichen Grenzlage durch das aktive i-te Mobiltelefon werden die Konfiguration und die Authentizität der Herkunft des soeben empfangenen elektrischen Signals in der Verarbeitungseinheit des Identifizierungsmodulprozessors des i-ten aktiven Mobilteilnehmers überprüft, sowie wird überprüft, ob das aktive i-te Mobiltelefon die Hochfrequenzsignale nicht empfangen hat, die durch die j-te Mobilfunk-Basisstation vor dem Empfang des Messergebnisses der räumlichen Grenzlage aus der k-ten Basisstation des Mobilfunknetzes gesendet wurden, wobei der numerische Wert der natürlichen Zahl j von dem numerischen Wert der natürlichen Zahl k abweicht und die natürliche Zahl j = 1, 2, ..., r; dann werden die negativ verifizierten elektrischen Signale gelöscht und wird ein positiv verifiziertes elektrisches Signal auf ein elektrisches Hochfrequenzsignal überlagert, das über elektromagnetische Wellen an einen mit einem Drucker und Plotter ausgestatteten Netzwerk-Server gesendet und zugleich in einem nichtflüchtigen Speicher des mit einem Drucker und Plotter ausgestatteten Netzwerk-Servers abgespeichert wird; im Drucker wird das Signal in einen Ausdruck eines codierten Satz von Ziffern und Buchstaben umgewandelt, der eine Aufzeichnung von Koordinaten eines Punktes auf der Grenzlinie der Strahlungszone der k-ten Mobilfunknetz-Basisstation, der in einem genau bestimmten Zeitintervall besteht, darstellt; im Plotter wird das Signal in ein Diagramm umgewandelt, das Visualisierung der Strahlungszonengrenze der k-ten Mobilfunk-Basisstation eines in einem genau festgelegten Zeitintervalls vorhandenen Mobilfunknetzes darstellt; danach wird ein durch die Uhr des i-en aktiven Mobiltelefons bestimmter Ortszeitindex, der den Zeitpunkt der Messung der räumlichen Grenzlage des aktiven i-ten Mobiltelefons bestimmt, in den Identifikationsmodulprozessor des i-ten Mobilteilnehmers eingegeben; und, nach Ergänzung des Zeitindexes um eine vordefinierte Konstantkomponente, wird ein geänderter Zeitindex erzeugt, und ein elektrisches Signal mit dem geänderten Zeitindex wird in dem Identifikationsmodulprozessor des aktiven i-ten Mobilteilnehmers ebenfalls erzeugt; die Überlagerung der Messergebnisse der räumlichen Lage des aktiven i-ten Mobiltelefons auf ein elektrisches Hochfrequenzsignal wird im Identifikationsmodulprozessor des aktiven i-ten Mobilfunkteilnehmers gestoppt und die Sendung der elektromagnetischen Wellen an einen mit einem Drucker und einem Plotter ausgestatteten Netzwerk-Server wird ebenfalls gestoppt; zum Ortszeitpunkt, der durch die Uhr des aktiven i-ten Mobilfunkteilnehmers bestimmt und als geänderter Zeitindex ausgedrückt wird, wird die Überlagerung der Messergebnisse der räumlichen Lage des aktiven i-ten Mobiltelefons auf ein elektrisches Hochfrequenzsignal wiederaufgenommen und die Sendung der elektromagnetischen Wellen an einen mit einem Drucker und einem Plotter ausgestatteten Netzwerk-Server wird ebenfalls wiederaufgenommen.

2. Ein Verfahren zur automatischen Bestimmung der Strahlungszonen der Mobilfunk-Basisstationen durch Verarbeitung von codierten elektrischen Signalen und deren Übertragung zwischen der Basisstation eines Mobilfunknetzes, dem Netzwerkserver und den Mobiltelefonen, **dadurch gekennzeichnet, dass** zum Zeitpunkt des Auftauchens des i-ten aktiven Mobiltelefons, wobei die natürliche Zahl i = 1, 2, ..., n, das die elektromagnetischen Wellen derzeit empfangen und gesendet wird, innerhalb der Zone in einer der r-Strahlungszonen erscheint, wobei r ist die natürliche endliche Zahl und die oben erwähnten Strahlungszonen durch jede der r-ten Basisstationen des r-ten Mobilfunknetzes erzeugt wurden, eine Messung der räumlichen Lage des aktiven i-ten Mobiltelefons innerhalb der Zone in regelmäßigen Intervallen findet statt; danach wird das Messergebnis der räumlichen Position des aktiven i-ten Mobiltelefons innerhalb der Zone codiert und auf ein elektrisches Hochfrequenzsignal überlagert, das an das aktive i-te Mobiltelefon gesendet wird; nach dem Empfang des elektrischen Hochfrequenzsignals mit den codierten Daten der räumlichen Lage innerhalb der Zone durch das i-te Mobiltelefon werden die Konfiguration und Authentizität der Herkunft in der Verarbeitungseinheit des Identifizierungsmodulprozessors des i-ten aktiven Mobilteilnehmers überprüft und nach Bestätigung entsprechender Konfiguration und Überprüfung der Authentizität der Herkunft vom eigenen Betreiber, wird das elektrische Signal mit den codierten Daten über die räumliche Lage des aktiven i-ten Mobiltelefons innerhalb der Zone in einer der r-Strahlungszonen, die durch jede der r-Mobilfunk-Basisstationen erzeugt werden, in dem Speicher des Identifizierungsmoduls des aktiven i-ten Mobilteilnehmers abgespeichert, und das elektrische Signal dem elektrischen Hochfrequenzsignal hinzugefügt, das weiter über elektromagnetische Wellen an einen mit einem Drucker und einem Plotter ausgestatteten Netzwerk-Server gesendet und im nichtflüchtigen Speicher des mit einem Drucker und einem Plotter ausgestatteten Netzwerk-Servers abgespeichert wird; danach werden die elektrische Signale von dem nicht-flüchtigen Speicher des Netzwerk-Servers abgeruft und an den Drucker geschickt; im Drucker wird das Signal in einen Ausdruck eines codierten Satz von Ziffern und Buchstaben umgewandelt, der eine Aufzeichnung von Koordinaten von Punkten nnerhalb der r-Strahlungszonen der r-ten Mobilfunknetz-Basisstation, der in einem genau bestimmten Zeitintervall besteht, darstellt; die elektrischen Signale werden zum Plotter geschickt und in ein Diagramm umgewandelt, das die Visualisierung der Strahlungszonenabdekung jeder Mobilfunk-Basisstation des r-Mobilfunknetzes in einem genau festgelegten Zeitintervall darstellt; ein Zeitindex, der durch die Uhr eines aktiven i-ten Mobiltelefons den Ortzeitpunkt bestimmt, wann die Messung der räumlichen Lage innerhalb der Zone eines aktiven i-ten Mobiltelefons ausgeführt wurde, wird in den Identifikationsmodulprozessor des aktiven i-ten Mobilteilnehmers letztmals eingegeben; danach wird das elektrische Signal um eine vordefinierte Konstantkomponente ergänzt und ein elektrisches Signal mit dem geänderten Zeitindex wird erzeugt; die Überlagerung der Messergebnisse der räumlichen Lage des aktiven i-ten Mobiltelefons auf ein elektrisches Hochfrequenzsignal wird im Identifikationsmodulprozessor des aktiven i-ten Mobilfunkteilnehmers gestoppt und die Sendung der elektromagnetischen Wellen an einen mit einem Drucker und einem Plotter ausgestatteten Netzwerk-Server wird ebenfalls gestoppt; zum Ortszeitpunkt, der durch die Uhr des aktiven i-ten Mobilfunkteilnehmers bestimmt und als geänderter Zeitindex ausgedrückt wird, wird die Überlagerung der Messergebnisse der räumlichen Lage des aktiven i-ten Mobiltelefons auf ein elektrisches Hochfrequenzsignal wiederaufgenommen und die Sendung der elektromagnetischen Wellen an einen mit einem Drucker und einem Plotter ausgestatteten Netzwerk-Server wird ebenfalls wiederaufgenommen.

## Revendications

1. Une méthode de détermination automatique des zones de rayonnement de la station de base du réseau cellulaire, impliquant le traitement des signaux électriques encodés et leur transmission entre la station de base d'un réseau cellulaire, un serveur réseau et des téléphones mobiles se **caractérise par** la démarche selon laquelle au moment où un ième téléphone mobile actif (où le nombre naturel « i » = 1, 2, ...., n,), par le biais duquel les ondes électromagnétiques sont ainsi reçues et transmises, apparaît dans la zone de rayonnement d'une kème station de base du réseau cellulaire (où le nombre naturel « k » = 1, 2, ..., r), et une fois ce ième téléphone mobile actif aura traversé les limites de la zone de rayonnement de la kème station de base du réseau cellulaire, les prélèvements de son emplacement aux limites de la zone sont immédiatement réalisés, et ensuite, le résultat de ce prélèvement concernant l'emplacement du ième téléphone mobile actif aux limites de la zone est encodé et superposé sur un signal électrique haute fréquence qui est envoyé vers ce ième téléphone mobile actif ; une fois le signal électrique haute fréquence avec des données encodées sur l'emplacement du ième téléphone mobile actif aux limites de la zone est reçu, la configuration et l'authenticité de l'origine de ce signal électrique sont vérifiées. Il est également vérifié si le ième téléphone mobile actif n'a pas reçu, avant la réception des prélèvements sur son emplacement aux limites de la zone provenant de la kème station de base du réseau cellulaire, les signaux électriques haute fréquence qui auraient été émis par la jème station de base du réseau cellulaire (où la valeur chiffrée du nombre naturel « j » diffère de la valeur chiffrée du nombre naturel « k », et le nombre naturel « j » = 1, 2, .... , r, ) ; ensuite, les signaux électriques dont la vérification se solde par un résultat négatif sont supprimés tandis que celui dont la vérification est positive est superposé sur un signal électrique haute fréquence, est envoyé, par le biais des ondes électromagnétiques, vers un serveur réseau, muni d'une imprimante et d'un traceur, et est stocké dans la mémoire non-volatile du serveur réseau, muni d'une imprimante et d'un traceur ; le signal électrique est alors converti dans l'imprimante en un relevé imprimé d'un ensemble encodé de chiffres et de lettres, à savoir un relevé de coordonnées des points appartenant aux limites de la zone de rayonnement de la kème station de base au sein d'un réseau cellulaire, existant dans un créneau de temps précis, et dans le traceur il est converti en un diagramme qui présente la visualisation des limites de la zone de rayonnement de la kème station de base au sein d'un réseau cellulaire, existant dans un créneau de temps précis ; par la suite, un indice temporel déterminé en temps local par l'horloge du ième téléphone mobile actif, exprimant le moment du prélèvement des données sur l'emplacement de ce ième téléphone mobile actif aux limites de la zone est introduit dans l'unité de traitement du module d'identification du ième téléphone mobile actif de l'abonné, et ensuite, après l'ajout d'une composante constante prédéfinie, un indice temporel modifié est créé, et un signal électrique avec un indice temporel modifié est produit dans l'unité de traitement du module d'identification du ième téléphone mobile actif de l'abonné ; la superposition des prélèvements de la position spatiale du ième téléphone mobile actif sur le signal électrique haute fréquence dans l'unité de traitement du module d'identification du ième téléphone mobile actif de l'abonné est alors arrêtée, aussi bien que la transmission des ondes électromagnétiques vers le serveur réseau, muni d'une imprimante et d'un traceur ; la superposition des prélèvements de la position spatiale du ième téléphone mobile actif sur le signal électrique haute fréquence redémarre au moment en temps local, déterminé par l'horloge du ième téléphone mobile actif et exprimé sous forme d'un indice temporel modifié, tout aussi comme la transmission des ondes électromagnétiques vers le serveur réseau, muni d'une imprimante et d'un traceur.

2. Une méthode de détermination automatique des zones de rayonnement de la station de base du réseau cellulaire, impliquant le traitement des signaux électriques encodés et leur transmission entre la station de base d'un réseau cellulaire, un serveur réseau et des téléphones mobiles se **caractérise par** la démarche selon laquelle au moment où un ième téléphone mobile actif (où le nombre naturel « i » = 1, 2, ...., n,), par le biais duquel les ondes électromagnétiques sont ainsi reçues et transmises, apparaît dans une des zones de rayonnement « r » (où le « r » est un nombre naturel fini), ces zones de rayonnement étant créées par chacune des stations de base du réseau cellulaire « r », dans chacune de ces stations de base du réseau cellulaire « r », les prélèvements de l'emplacement du ième téléphone mobile actif au sein de la zone sont réalisés à des intervalles réguliers ; ensuite, le résultat de ce prélèvement concernant l'emplacement du ième téléphone mobile actif au sein de la zone est encodé et superposé sur un signal électrique haute fréquence qui est envoyé vers ce ième téléphone mobile actif ; une fois le signal électrique haute fréquence avec des données encodées sur l'emplacement d'entre zones du ième téléphone mobile actif au sein de la zone aura été reçu par le ième téléphone mobile actif au sein de la zone, la configuration et l'authenticité de l'origine du signal électrique reçu seront vérifiées dans l'unité de traitement du module d'identification du ième téléphone mobile actif de l'abonné ; lorsque la configuration et l'authenticité de l'origine de ce signal électrique auront été confirmées par l'opérateur du réseau cellulaire de l'abonné, le signal électrique avec des données encodées sur l'emplacement du ième téléphone mobile actif au sein de l'une des zones de rayonnement « r », créée par chacune des stations de base du réseau cellulaire « r », sera stocké dans la mémoire de l'unité de traitement du module d'identification du ième téléphone mobile actif de l'abonné ; il est par la suite superposé sur un signal électrique haute fréquence, envoyé, par le biais des ondes électromagnétiques, vers un serveur réseau, muni d'une imprimante et d'un traceur, et est stocké dans la mémoire non-volatile du serveur réseau, muni d'une imprimante et d'un traceur ; les signaux électriques sont ensuite téléchargés depuis la mémoire non-volatile du serveur réseau et transmis vers l'imprimante où ils sont convertis en un relevé imprimé d'un ensemble encodé de chiffres et de lettres, à savoir un relevé de coordonnées des points situés au sein de l'une des zones de rayonnement de chacune des stations de base du réseau cellulaire « r », existant dans un créneau de temps précis, et ces signaux électriques sont transmis vers le traceur où ils sont convertis en un diagramme qui présente la visualisation de la couverture des zones de rayonnement créées par chacune des stations de base du réseau cellulaire « r », existant dans un créneau de temps précis ; par la suite, un indice temporel est introduit dans l'unité de traitement du module d'identification du ième téléphone mobile actif de l'abonné, cet indice exprimant en temps local déterminé par l'horloge du ième téléphone mobile actif le moment du dernier prélèvement de l'emplacement du ième téléphone mobile actif au sein de la zone ; le signal électrique est alors complété par une composante constante prédéfinie et un signal électrique avec un indice temporel modifié est produit ; la superposition des prélèvements de la position spatiale du ième téléphone mobile actif au sein de la zone sur le signal électrique haute fréquence dans l'unité de traitement du module d'identification du ième téléphone mobile actif de l'abonné est alors arrêtée, aussi bien que la transmission des ondes électromagnétiques vers le serveur réseau, muni d'une imprimante et d'un traceur ; la superposition des prélèvements de la position spatiale du ième téléphone mobile actif sur le signal électrique haute fréquence redémarre au moment en temps local, déterminé par l'horloge du ième téléphone mobile actif et exprimé sous forme d'un indice temporel modifié, tout aussi comme la transmission des ondes électromagnétiques vers le serveur réseau, muni d'une imprimante et d'un traceur.
